# FASCICULE DE BREVET EUROPEEN

(11) **EP 4 377 111 B1**
(45) Date de publication et mention de la délivrance du brevet: **25.02.2026**
(21) Numéro de dépôt: 22748385.6
(22) Date de dépôt: 29.07.2022
(51) Int. Cl.: B60J 10/36, B60J 10/75

(54) **MOYEN D'ÉTANCHÉITÉ EXTÉRIEUR POUR UN OUVRANT D'UN VÉHICULE**
AUSSENDICHTUNGSMITTEL FÜR EINE FAHRZEUGTÜR
EXTERNAL SEALING MEANS FOR A DOOR OF A VEHICLE

(30) Priorité: 29.07.2021 FR 2108282
(43) Date de publication de la demande: 05.06.2024
(73) Titulaire: Renault s.a.s, 92100 Boulogne Billancourt (FR); Cooperstandard France, 35503 Vitré Cedex (FR)
(72) Inventeur: BARTHOUMEYROU, Pascal, 78114 Magny les hameaux (FR); BOUCAULT, Dominique, 35500 Vitré (FR); LE COEDIC, Yoann, 78120 Rambouillet (FR); RIFFAUD, Gilles, 35200 Rennes (FR); VOIRIN, Michel, 76520 FRANQUEVILLE SAINT PIERRE (FR)
(74) Mandataire: Novaimo
(86) Numéro de dépôt international: PCT/EP2022/071323
(87) Numéro de publication internationale: WO 2023/006939

(56) Documents cités:
- EP-A1- 0 416 899
- DE-A1- 102019 130 529
- JP-A- 2007 216 906

## Description

L'invention concerne un moyen d'étanchéité extérieur, notamment un lécheur extérieur, pour un ouvrant d'un véhicule ainsi qu'un agencement d'un tel moyen d'étanchéité pour un ouvrant. L'invention porte également sur un ouvrant et sur un véhicule comprenant un tel moyen d'étanchéité et/ou agencement.

Un véhicule, en particulier un véhicule automobile, comprend généralement au moins un ouvrant comprenant une vitre mobile entre une position ouverte et une position fermée. L'ouvrant comprend au moins un panneau extérieur au-dessus duquel s'étend la vitre en position fermée. Classiquement, un moyen d'étanchéité extérieur est disposé entre le panneau extérieur et la vitre de sorte à éviter l'entrée d'humidité, notamment due à la pluie sur la vitre en position fermée, ou de particules entre la vitre et le panneau extérieur. Un tel moyen d'étanchéité est agencé en haut du panneau extérieur de sorte à venir « lécher » la vitre lors de ses montées et descentes de changement de positions, d'où son appellation de « lécheur ».

Un inconvénient d'un tel lécheur réside dans le fait qu'il est difficile d'en maintenir les extrémités afin qu'elles soient immobilisées, notamment selon la direction verticale tout en les maintenant fermement en position selon la direction transversale. En effet, au cours des montées de la vitre, les frottements entre la vitre et le lécheur tendent à entraîner ce dernier vers le haut. Un mauvais maintien des extrémités du lécheur extérieur engendre alors, au terme de nombreux cycles de fermeture de la vitre, une désolidarisation des extrémités par rapport au panneau extérieur auquel elles sont fixées. En conséquence, au fil des années, de tels lécheurs extérieurs rencontrent des problèmes de tenue aux extrémités, appelés aussi « déplaquage » eu égard au fait que le lécheur n'est plus plaqué contre le panneau extérieur et/ou la vitre. En plus d'une perte d'étanchéité à ce niveau, il en résulte une qualité perçue moindre préjudiciable.

Il est connu d'assurer la fixation des extrémités du moyen d'étanchéité par l'intermédiaire de dispositifs de fixation de type « clippage » coopérant avec des formes embouties disposées dans le panneau extérieur de l'ouvrant. Ces solutions restent néanmoins contraignantes. De tels dispositifs de fixation étant rigides et indéformables, leur installation requiert l'exercice d'importants efforts. Il en résulte une installation incorrecte du moyen d'étanchéité qui entraîne, *in fine,* le déplaquage du moyen d'étanchéité.

Les documents DE102019130529, JP2007216906 et EP0416899 divulguent des exemples de réalisation de moyens d'étanchéité pour un ouvrant de véhicule.

La présente invention s'inscrit dans ce contexte et vise à fournir un moyen d'étanchéité extérieur et un agencement d'installation simple et à moindre coût remédiant aux inconvénients ci-dessus.

L'invention concerne un moyen d'étanchéité, notamment un lécheur extérieur, destiné à être disposé au contact d'une vitre d'un ouvrant d'un véhicule, le moyen d'étanchéité comprenant un corps allongé s'étendant le long d'une première direction et au moins un dispositif de fixation rapporté et configuré pour coopérer avec un panneau de l'ouvrant, dans lequel :
- le corps présente un profil sensiblement en « U » comprenant une branche primaire et une branche secondaire, configurées pour être disposées de part et d'autre du panneau de l'ouvrant ;
- l'au moins un dispositif de fixation comprend une embase et au moins un organe de blocage s'étendant en saillie de l'embase, l'embase étant solidaire de l'une de la branche primaire ou de la branche secondaire et l'organe de blocage s'étendant vers l'autre de la branche primaire ou de la branche secondaire, à distance non nulle de celle-ci ;
- l'organe de blocage comprend une pluralité de lamelles, parallèles ou sensiblement parallèles entre elles, comprenant au moins trois lamelles configurées pour coopérer avec le panneau de l'ouvrant et pour maintenir le moyen d'étanchéité relativement audit panneau le long d'au moins une deuxième direction orthogonale à la première direction.

L'au moins un dispositif de fixation peut être disposé dans une portion extrême du corps le long de la première direction, notamment dans une portion extrême représentant entre 5 et 20% d'une longueur totale, le long de la première direction, du corps du moyen d'étanchéité.

Le dispositif de fixation peut être de type insert, notamment venu de moulage en matière plastique tel que du polypropylène chargé, le dispositif de fixation pouvant être rapporté et/ou surmoulé avec le corps du moyen d'étanchéité, notamment par un surmoulage en élastomère thermoplastique. Notamment, une première surface du dispositif de fixation peut comprendre un organe d'adhésion tel qu'un bossage, un grainage, des picots, des rainures ou des nervures configuré(s) pour optimiser la liaison entre le corps et le dispositif de fixation.

Au moins deux lamelles adjacentes de la pluralité de lamelles peuvent être séparées l'une de l'autre, le long de la première direction, par un espacement de l'ordre de l'épaisseur d'au moins une lamelle de la pluralité de lamelles, notamment 0.9 fois à 1.1 fois l'épaisseur d'au moins une lamelle de la pluralité de lamelles.

Egalement, tout ou partie des lamelles de la pluralité de lamelles peut comprendre un bord incliné relativement à l'embase présentant un angle α compris entre 15 et 60°. Tout ou partie des lamelles de la pluralité de lamelles peut comprendre un bord supérieur, plan ou sensiblement plan, configuré pour former butée du panneau le long de la deuxième direction. Notamment, les bords supérieurs de tout ou partie de la pluralité de lamelles peut s'inscrire dans un plan commun, orthogonal à la deuxième direction.

Le ou les bord(s) supérieur(s) d'un premier sous-ensemble de lamelle(s) de la pluralité de lamelles peu(ven)t s'inscrire dans un premier plan et le ou les bord(s) supérieur(s) d'un deuxième sous-ensemble de lamelle(s) de la pluralité de lamelles peu(ven)t s'inscrire dans un deuxième plan, distinct du premier plan, le premier plan et le deuxième plan étant parallèles entre eux et étant orthogonaux à la deuxième direction.

L'organe de blocage comprend au moins un crochet destiné à coopérer avec le panneau de sorte à maintenir le moyen d'étanchéité relativement audit panneau le long d'au moins une troisième direction, orthogonale à la première direction et à la deuxième direction.

Le moyen d'étanchéité peut comprendre une pluralité de dispositifs de fixation, tout ou partie de la pluralité de dispositifs de fixation pouvant être disposée dans une même portion extrême du corps et/ou dans des portions extrêmes opposées du corps.

L'invention concerne également un agencement d'un moyen d'étanchéité pour un ouvrant de véhicule automobile, notamment pour une porte latérale, l'agencement comprenant :
- un panneau extérieur d'ouvrant dont au moins une partie extrêmale, le long de la première direction, d'une extrémité supérieure comprend au moins un orifice, notamment un orifice oblong ;
- un moyen d'étanchéité tel qu'exposé précédemment, disposé en prise de l'extrémité supérieure afin que l'ensemble de la pluralité de lamelles de l'organe de blocage s'étende au moins en partie dans l'au moins un orifice de sorte qu'une bordure dudit orifice forme butée de l'organe de blocage le long de la première direction afin de maintenir le moyen d'étanchéité par rapport au panneau extérieur au moins selon ladite première direction.

Le panneau extérieur peut être caractérisé par une épaisseur. Aux abords de l'au moins un orifice, au moins une lamelle de la pluralité de lamelles peut présenter une profondeur supérieure ou égale à 1.5 fois l'épaisseur du panneau extérieur.

Egalement au sein de l'agencement :
- la partie extrémale de l'extrémité supérieure du panneau extérieur d'ouvrant peut comprendre une pluralité d'orifices, notamment oblongs ;
- le moyen d'étanchéité peut comprendre une pluralité de dispositifs de fixation, chacun desdits dispositifs pouvant être configuré pour s'étendre au moins en partie dans un orifice qui lui est propre de sorte à positionner et maintenir le moyen d'étanchéité par rapport au panneau extérieur au moins selon ladite première direction.

L'invention concerne encore un ouvrant d'un véhicule comprenant une vitre, notamment une vitre mobile configurée pour être déplacée entre une position ouverte et une position fermée, l'ouvrant comprenant un agencement et/ou un moyen d'étanchéité tel qu'exposé ci-dessus, le moyen d'étanchéité étant disposé de sorte à s'étendre au contact de la vitre.

L'invention concerne enfin un véhicule, notamment un véhicule automobile, comprenant un ouvrant et/ou un agencement et/ou un moyen d'étanchéité selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une vue schématique d'un véhicule selon un mode de réalisation.
La figure 2 est une vue schématique partielle d'un agencement selon un mode de réalisation, au niveau d'une porte latérale avant gauche, vue depuis l'habitacle.
La figure 3 est une vue en coupe transversale de détail de l'agencement selon le mode de réalisation.
La figure 4 est une vue partielle en perspective d'un panneau extérieur de l'agencement selon un mode de réalisation.
La figure 5 est une vue partielle en perspective d'un dispositif de fixation du moyen d'étanchéité selon un premier mode de réalisation.
La figure 6 est une vue en perspective d'un dispositif de fixation du moyen d'étanchéité selon un deuxième mode de réalisation.
La figure 7 est vue en perspective d'une variante de réalisation du dispositif de fixation au sein de l'agencement selon le mode de réalisation.

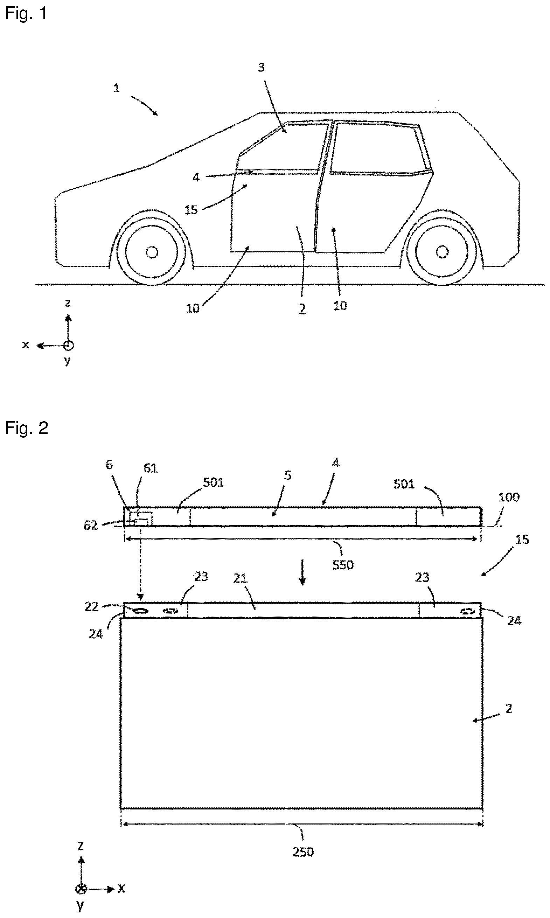

La figure 1 illustre schématiquement un mode de réalisation d'un véhicule 1, en particulier un véhicule automobile. Le véhicule 1 comprend au moins un ouvrant 10, notamment une porte latérale avant ou arrière gauche. Egalement, la porte peut être une porte latérale avant ou arrière droit. Alternativement, l'ouvrant 10 peut être une porte non latérale, par exemple une porte de coffre. A des fins de clarté, l'ouvrant 10 décrit ci-après est la porte latérale avant gauche du véhicule 1, il est néanmoins entendu qu'une telle représentation n'est en rien limitative.

Par convention dans la description ci-après, la direction selon laquelle un véhicule 1 automobile se déplace en ligne droite est définie comme étant la direction longitudinale X. Le sens avant correspond au sens dans lequel le véhicule 1 automobile se déplace habituellement le long de la direction longitudinale et est opposé au sens arrière. La direction perpendiculaire à la direction longitudinale et située dans un plan parallèle au sol est nommée direction transversale Y. La direction perpendiculaire aux directions X et Y est nommée direction verticale Z. Ainsi, on définit un repère direct XYZ représenté dans les figures le nécessitant.

Egalement, on entend, par « intérieur », le côté le plus proche de l'intérieur de l'habitacle du véhicule 1. De la même manière, on entend, par « extérieur », le côté opposé à l'intérieur de l'habitacle, c'est-à-dire le plus proche d'un environnement extérieur au véhicule 1. Enfin, on entend, par « inférieur », le côté le plus proche du sol sur lequel repose le véhicule 1 et on entend, par « supérieur », le côté le plus éloigné du sol ou le plus haut.

L'ouvrant 10 comprend un caisson, non représenté, comportant au moins un panneau extérieur 2, tourné vers l'environnement extérieur au véhicule 1. Par exemple, le panneau extérieur 2 peut être en tôle d'alliage d'aluminium ou en tôle d'acier. De préférence, l'ouvrant 10 comprend une vitre 3, notamment une vitre 3 mobile montée coulissante afin d'être déplacée entre une position fermée et une position ouverte. La vitre 3 s'étend au-dessus du panneau extérieur 2 en position fermée et vis-à-vis, ou sensiblement en vis-à-vis, du panneau extérieur 2 en position ouverte. L'ouvrant 10 comprend ainsi un agencement 15 d'un moyen d'étanchéité 4 extérieur et/ou un moyen d'étanchéité 4 extérieur selon l'invention.

L'agencement 15 comprend au moins le moyen d'étanchéité 4 et le panneau extérieur 2 tel que précédemment exposé. Une extrémité supérieure 21 du panneau extérieur 2 comprend au moins un orifice 22, ou une boutonnière, apte à coopérer avec le moyen d'étanchéité 4.

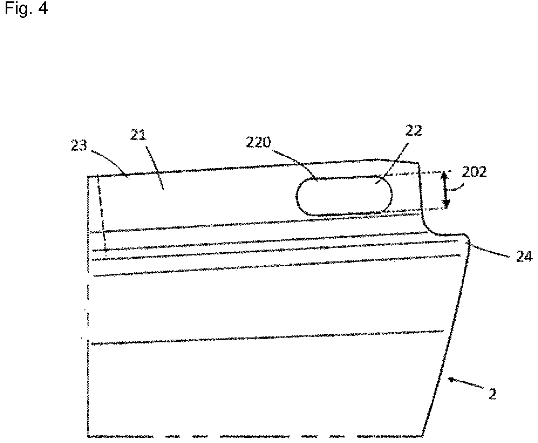

Notamment, un tel orifice 22 peut être de forme oblongue, tel qu'illustré à la figure 4.

Particulièrement, l'au moins un orifice 22 est compris dans une partie extrémale 23 de l'extrémité supérieure 21 du panneau, schématiquement délimitée en lignes pointillées à la figure 2. On entend, par « partie extrémale », une partie terminale d'une longueur 250 du panneau extérieur 2, définie le long d'une première direction 100. En l'espèce la première direction 100 est parallèle ou sensiblement parallèle à la direction longitudinale X lorsque l'agencement 15 selon l'invention est équipé dans le véhicule 1. La partie extrêmale 3 comprend l'un des flancs longitudinaux extrêmes 24 du panneau extérieur 2, délimitant celui-ci le long de la première direction 100. A titre d'exemple, la partie extrêmale 23 peut correspondre à 5 à 30%, notamment 5 à 20%, de la longueur du panneau extérieur 2. La partie extrémale considérée peut correspondre à une partie extrémale arrière du panneau extérieur 2 de l'ouvrant 10, en l'espèce une porte latérale avant. Selon des alternatives non détaillées, la partie extrémale 23 considérée peut être une partie extrêmale 23 avant dudit panneau.

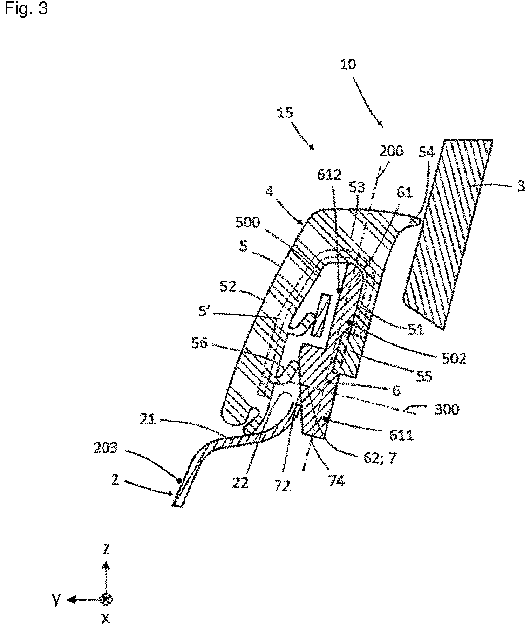

Le moyen d'étanchéité 4 est de préférence un lécheur extérieur configuré pour coopérer avec le panneau extérieur 2 et destiné à venir au contact de la vitre 3, tel qu'illustré aux figures 2 et 3. Le moyen d'étanchéité 4 comprend un corps 5 allongé qui s'étend le long de la première direction 100 et au moins un dispositif de fixation 6, notamment au moins un dispositif de fixation 6 rapporté.

Le corps 5 présente un profil sensiblement en « U » comprenant une branche primaire 51 et une branche secondaire 52 reliées entre elles par une branche intermédiaire 53, formant la base du « U ». En outre, le corps 5 peut comprendre une lèvre supérieure 54, issue d'au moins l'une desdites branches, destinée à appuyer contre la vitre 3 mobile et à frotter contre celle-ci lorsque la vitre 3 est déplacée afin d'en accompagner le mouvement sans laisser de trace sur la vitre 3 ou sans la détériorer. La lèvre supérieure 54 participe également à assurer une étanchéité à l'interface entre la vitre 3 mobile et le caisson de l'ouvrant 10.

Le corps 5 du moyen d'étanchéité 4 est préférentiellement réalisé par extrusion, par exemple au moins dans un matériau thermoplastique. Selon un exemple de réalisation non limitatif, le corps 5 peut être réalisé dans une pluralité de matériaux. Notamment, le corps 5 peut comprendre une vertèbre 5' rigide, représentée en lignes pointillés, par exemple réalisée en aluminium ou en alliage d'aluminium.

Particulièrement, l'au moins un dispositif de fixation 6 est disposé dans une portion extrême 501 du corps 5 le long de la première direction 100. On entend, par « portion extrême 501 », une portion terminale d'une longueur totale 550 du corps 5, définie le long de la première direction 100. Notamment, la portion extrême 501 représente entre 5 et 25%, voire entre 5 et 20%, de la longueur totale du corps 5 du moyen d'étanchéité 4. A titre d'exemple, une telle portion extrême 501 peut correspondre à une portion extrême 501 arrière du corps 5, lorsqu'il est positionné dans l'ouvrant 10. Alternativement, la partie extrémale 23 considérée peut être une portion extrême 501 avant du corps 5.

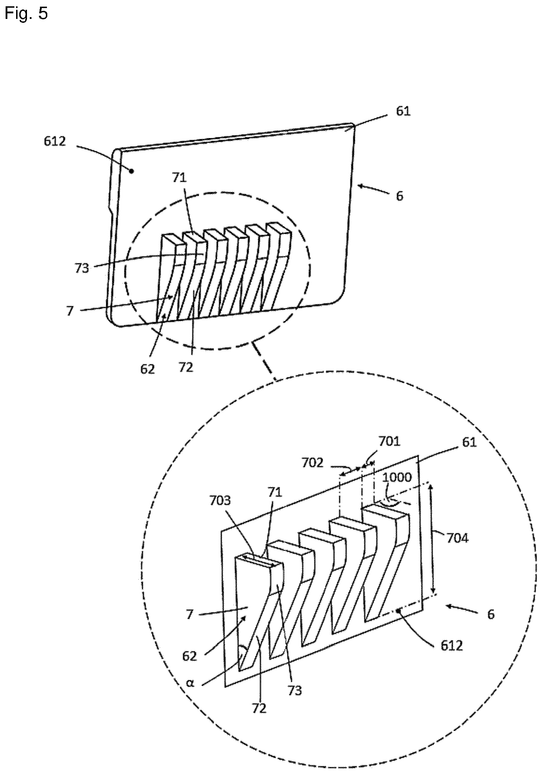

Comme détaillé aux figures 3 et 5, le dispositif de fixation 6 comprend une embase 61 et au moins un organe de blocage 62 s'étendant en saillie de l'embase 61. L'embase 61 est disposée solidaire de l'une de la branche primaire 51 ou de la branche secondaire 52 du corps 5 tandis que l'organe de blocage 62 s'étend vers l'autre de la branche primaire 51 ou de la branche secondaire 52, à distance non nulle de celle-ci. En l'espèce, l'embase 61 est montée solidaire de la branche primaire 51 et l'organe de blocage 62 s'étend vers la branche secondaire 52, c'est-à-dire vers l'environnement extérieur, il est néanmoins entendu que la description ci-après peut s'appliquer *mutatis mutandis* au positionnement inverse.

Le dispositif de fixation 6 s'étend ainsi au moins en partie dans un espace interne 500 délimité par les branches 51, 52, 53 du corps 5. Une première surface 611 de l'embase 61 est ainsi au contact d'un pan 502 du corps 5, notamment de la branche primaire 51, tournée vers l'espace interne 500 du corps 5.

Selon le mode de réalisation illustré, le dispositif de fixation 6 est avantageusement de type insert. Notamment, le dispositif de fixation 6 peut être venu de moulage en matière plastique, le dispositif de fixation 6 étant rapporté et/ou surmoulé avec le corps 5 du moyen d'étanchéité 4. Le dispositif de fixation 6 peut par exemple être réalisé dans un matériau plastique rigide, tel que du polypropylène chargé, par exemple à 30%, permettant la réalisation de pièce plus complexes.

En d'autres termes, le dispositif de fixation 6 peut être est préalablement réalisé par moulage d'une matière plastique, puis une opération de surmoulage permet de fixer le dispositif de fixation 6 au corps 5 du moyen d'étanchéité 4. Le surmoulage 55 peut recouvrir au moins partiellement de dispositif de fixation 6, notamment l'embase 61 du dispositif de fixation 6. Le surmoulage 55 peut aussi complémentairement recouvrir une partie du corps 5, notamment de la branche solidaire du dispositif de fixation 6, c'est-à-dire ici la branche primaire 51. Le surmoulage 55 a pour fonction de créer une liaison définitive entre le dispositif de fixation 6 et le corps 5, c'est-à-dire une liaison non-démontable ou seulement démontable par altération ou sacrifice du moyen d'étanchéité 4. Le surmoulage 55 est préférentiellement réalisé en thermoplastique ou en matière plastique souple, notamment dans un matériau plus souple que celui du corps 5.

Selon l'exemple illustré, le dispositif de fixation 6 peut être surmoulé dans un positionnement tel qu'il s'étend au moins en appui de la branche le portant, en l'espèce la branche primaire 51. Optionnellement, le dispositif de fixation 6 peut, en outre, être positionné en appui de la branche intermédiaire 53 du « U » du corps 5.

Selon une alternative non représentée, le dispositif de fixation 6 peut, préalablement à son surmoulage 55, être disposé dans une découpe ou un renfoncement du corps 5 apte à recevoir le dispositif de fixation 6 et destiné(e) à positionner le dispositif de fixation 6 dans le corps 5, notamment dans la portion extrême du corps 501, le long de la première direction 100. La découpe ou le renfoncement peut, par exemple, s'étendre dans tout ou partie d'une épaisseur de la branche portant le dispositif de fixation 6.

Avantageusement, la première surface 611 du dispositif de fixation 6, comprend un organe d'adhésion, non représenté, tel qu'un bossage, un grainage, des picots, des rainures ou des nervures, configuré pour optimiser la liaison entre le corps 5 et le dispositif de fixation, en particulier entre le surmoulage 55 et le dispositif de fixation 6.

Selon l'invention, l'organe de blocage 62 comprend une pluralité de lamelles 7. On entend, par « lamelle », une structure allongée de forme définie. Notamment, l'organe de blocage 62 comprend au moins trois lamelles 7. Les lamelles 7 sont conformées et configurées pour coopérer avec le panneau extérieur 2 de l'ouvrant 10, en particulier avec l'au moins un orifice 22, de sorte à maintenir, tel que d'avantage exposé ci-après, le moyen d'étanchéité 4 relativement au panneau le long d'au moins une deuxième direction 200, orthogonale à la première direction 100. La deuxième direction 200 est, par exemple, sensiblement verticale.

Tout ou partie de la pluralité de lamelles 7 est conformée et disposée de sorte à s'inscrire dans une forme globale définissant l'organe de blocage 62, ladite forme étant adaptée pour coopérer avec le panneau extérieur 2.

Particulièrement, les lamelles 7 s'étendent parallèlement ou sensiblement parallèlement les unes aux autres. En outre, lesdites lamelles 7 s'étendent parallèlement à la deuxième direction 200.

De telles lamelles 7 permettent avantageusement une résistance adaptée de la liaison entre le moyen d'étanchéité 4 et le panneau extérieur 2 afin de les maintenir solidaires, tout en conférant au dispositif de fixation 6 une déformabilité élastique permettant l'installation du moyen d'étanchéité 4 sur le panneau extérieur 2 à moindre effort, et donc la simplification de l'assemblage de l'agencement 15. En ce sens, les lamelles 7 sont de préférence des structures pleines.

Afin d'assurer une résistance et une déformabilité élastique homogène au sein de l'organe de blocage 62, les lamelles 7 de la pluralité de lamelles présentent de préférence une épaisseur 701 égale ou sensiblement égale. On entend par exemple, par « sensiblement égale », des épaisseurs de valeurs identiques ±15%, voire ±10%.

En ce sens, les lamelles 7 peuvent également être particulièrement disposées au sein de l'organe de blocage 62 de sorte qu'au moins deux lamelles 7 adjacentes de la pluralité de lamelles 7 sont séparées l'une de l'autre, le long de la première direction 100, par un espacement 702 de l'ordre de l'épaisseur ±10% d'au moins une lamelle 7 de la pluralité de lamelles 7. En particulier, les lamelles 7 de la pluralité de lamelles peuvent être disposées régulièrement, c'est-à-dire qu'elles présentent des espacements 702 égaux.

Selon un premier mode de réalisation du dispositif de fixation 6, illustré à la figure 5, tout ou partie des lamelles 7 de la pluralité de lamelle comprend un bord supérieur 71, plan ou sensiblement plan, configuré pour être en butée du panneau extérieur 2 le long de la deuxième direction 200 lorsque l'agencement 15 est assemblé.

A des fins de clarté, la description ci-après est faite en référence à l'une des lamelles 7 de la pluralité de lamelles 7, il est néanmoins entendu que les caractéristiques décrites peuvent s'étendre à tout ou partie des lamelles 7 de la pluralité de lamelles 7, sauf mention contraire.

Le bord supérieur 71 est relié à l'embase 61 du dispositif de fixation 6 et s'étend transversalement à celle-ci. En particulier, le bord supérieur 71 peut s'étendre perpendiculairement à au moins une partie d'une deuxième surface 612 de l'embase 61, opposée à la première surface 611. Selon le premier mode de réalisation, les bords supérieurs 71 de tout ou partie de la pluralité de lamelles 7 s'inscrivent dans un plan 1000 commun, orthogonal à la deuxième direction 200.

En outre, la lamelle 7 peut avantageusement comprendre un bord incliné 72 relativement à l'embase 61. On entend, par « incliné », un bord s'étendant à un angle supérieur à 5° et inférieur à 85° relativement à l'embase 61. Notamment, le bord incliné 72 présente un angle α compris entre 15 et 60 ° relativement à l'embase 61. Un tel bord incliné 72 participe à faciliter l'installation du moyen d'étanchéité 4 au sein de l'ouvrant 10, tel que davantage décrit ci-après, en guidant le dispositif de fixation 6 dans l'au moins un orifice 22 du panneau extérieur 2. Le bord incliné 72 peut, tel qu'illustré, être relié au bord supérieur 71 par l'intermédiaire d'un bord extrême 73 droit, courbé ou incliné. De manière alternative, le bord incliné 72 peut être directement relié au bord supérieur 71.

De la sorte, lorsque l'agencement 15 est assemblé, le moyen d'étanchéité 4 est disposé sur le panneau extérieur 2 afin que le corps 5 s'étende en prise de l'extrémité supérieure 21 du panneau extérieur 2. Autrement dit, la branche primaire 51 et la branche secondaire 52 sont disposées de part et d'autre du panneau extérieur 2, la branche primaire 51 étant tournée vers l'habitacle du véhicule 1.

Le moyen d'étanchéité 4 s'étend ainsi en partie entre le panneau extérieur 2 et la vitre 3, par exemple selon une troisième direction 300, orthogonale à la première direction 100 et à la deuxième direction 200.

Le dispositif de fixation 6 s'étend en regard de l'au moins un orifice 22 du panneau extérieur 2 afin que l'ensemble de la pluralité de lamelles 7 de l'organe de blocage 62 coopère avec le panneau extérieur 2 et s'étende au moins en partie dans l'orifice 22. Par exemple, les bords supérieurs 71 et les bords inclinés 72 des lamelles 7 s'étendent en partie au travers de l'orifice 22. Notamment, lorsque l'orifice 22 est de forme oblongue, celui-ci est positionné de manière telle que sa dimension la plus longue s'étend parallèlement ou sensiblement parallèlement à la première direction 100.

De la sorte, lorsque le moyen d'étanchéité 4 est entraîné vers le haut par le déplacement de la vitre 3, une bordure 220, notamment une partie supérieure de la bordure 220, de l'orifice 22 forme butée de l'organe de blocage 62 le long de la deuxième direction 200, bloquant tout déplacement du bas vers le haut et maintenant le moyen d'étanchéité 4 relativement au panneau extérieur 2. Le moyen d'étanchéité 4 reste ainsi positionné de manière adaptée, prévenant de ce fait son déplaquage au fil des cycles d'ouverture de la vitre 3.

Afin d'optimiser la liaison entre le moyen d'étanchéité 4 et le panneau extérieur 2, au moins l'une des lamelles 7, notamment le bord supérieur 71 de ladite lamelle, présente une profondeur 703 supérieure ou égale à 1.5 fois une épaisseur 201 du panneau extérieur 2. L'épaisseur 201 du panneau extérieur 2 correspond à la dimension mesurée au niveau de l'orifice 22 le long de la troisième direction 300, c'est à dire le long de la direction transversale Y. Similairement, la profondeur 703 de la lamelle 7 est mesurée le long de la troisième direction 300, entre la deuxième surface 612 de l'embase 61 et le bord le plus éloignée de celle-ci le long de la troisième direction 300, c'est-à-dire ici le bord extrême 73. Un tel arrangement prévient la désolidarisation accidentelle du moyen d'étanchéité 4 et du panneau extérieur 2.

En outre, au moins l'une des lamelles 7 de la pluralité de lamelle 7 peut présenter une hauteur 704 supérieure ou égale à 1.5 fois une hauteur 202 de l'orifice 22 du panneau extérieur 2 configuré pour le recevoir. La hauteur 704 de la lamelle 7 est par exemple mesurée entre le bord supérieur 71 et un bord inférieur 74 de la lamelle 7, opposé au bord supérieur 71 le long de la première direction 100. De la même manière, la hauteur 202 de l'orifice 22 est mesurée le long de la deuxième direction 200 entre deux points verticalement les plus distants de la bordure 220 de l'orifice 22. De tels dimensionnements contribuent à assurer le positionnement adapté de l'organe de blocage 62, et par extension du moyen d'étanchéité 4, relativement au panneau extérieur 2. Par exemple, le bord incliné 72 guidant le positionnement du moyen d'étanchéité 4 relativement au panneau extérieur 2, notamment à la bordure 220 de l'orifice 22, peut en outre être configuré pour s'étendre sur au moins 30%, voire 50% de la hauteur 704 de la lamelle 7.

Selon un avantage additionnel de l'invention, le moyen d'étanchéité 4 peut être utilisé sur différents types de véhicules 1 et/ou ouvrants 10. En effet, le dispositif de fixation 6 peut facilement être adapté à différents besoins, par exemple différents degrés de résistance face un effort exercé le long de la deuxième direction 200, en ajustant le nombre ou les dimensions des lamelles 7.

De manière optionnelle, afin d'optimiser l'étanchéité de l'interface entre le moyen d'étanchéité 4 et le panneau extérieur 2, le corps 5 peut, en outre, comprendre une ou plusieurs lèvre(s) intermédiaire(s) 56 destinée(s) à coopérer avec le panneau extérieur 2 et/ou avec le dispositif de fixation 6.

Par exemple, les lèvres supérieures 56 peuvent être issues de la branche opposée au dispositif de fixation 6, en l'espèce la branche secondaire 52, et s'étendre en saillie de celle-ci. Notamment, elles sont issues du pan 502. Elles peuvent s'étendre dans l'espace interne 500 afin de venir au contact du panneau extérieur 2, notamment aux abords de la bordure 220 de l'orifice 22. Les lèvres 56 participent notamment à pousser l'organe de blocage 62 vers la branche secondaire 52, et ainsi assure son positionnement dans l'orifice 22.

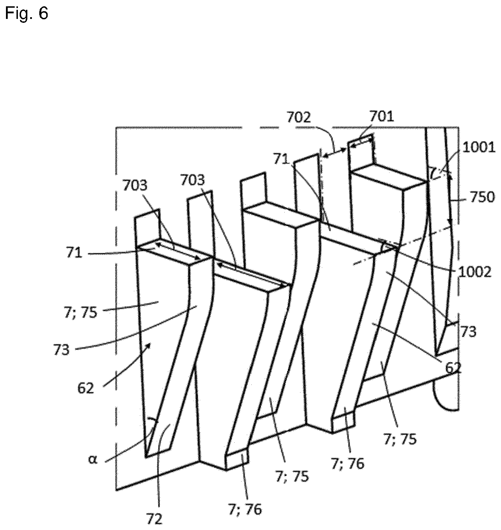

La figure 6 illustre un deuxième mode de réalisation du dispositif de fixation 6 sensiblement identique à celui précédemment exposé, aussi la description s'applique-t-elle *mutatis mutandis.* Le deuxième mode de réalisation se distingue du précédent en ce que la pluralité de lamelles 7 comprend un premier sous-ensemble 75 et un deuxième sous-ensemble 76 de lamelles 7 de positionnement et/ou de dimensionnements distincts.

Il est entendu que les lamelles 7 du premier sous-ensemble 75 et/ou les lamelles 7 du deuxième sous-ensemble 76 peuvent présenter tout ou partie des caractéristiques telles que précédemment exposées. En d'autres termes, au sein d'un même sous-ensemble 75, 76, tout ou partie des lamelles 7 considérées peuvent être identiques ou sensiblement identiques. On entend, par « sous-ensemble », au moins une lamelle, de préférence plusieurs lamelles 7, de la pluralité de lamelles 7 présentant un positionnement et/ou un dimensionnement spécifique. Dans l'exemple illustré, le premier sous-ensemble 75 et le deuxième sous-ensemble 76 comprennent respectivement, de manière non limitative, trois lamelles 7 et deux lamelles 7.

En particulier, selon le deuxième mode de réalisation, les bords supérieurs 71 des lamelles du premier sous-ensemble 75 s'inscrivent dans un premier plan 1001 tandis que les bords supérieurs des lamelles du deuxième sous-ensemble 76 s'inscrivent dans un deuxième plan 1002, distinct du premier plan 1001. En particulier, le premier plan 1001 et le deuxième plan 1002 sont parallèles ou sensiblement parallèles entre eux, c'est à dire qu'ils s'étendent orthogonalement à la deuxième direction 200.

Autrement dit, les bords supérieurs 71 des lamelles 7 du deuxième sous-ensemble 76 présentent une position décalée le long de la deuxième direction 200, par exemple sensiblement verticalement, relativement aux bords supérieurs 71 des lamelles 7 du premier sous-ensemble 75. Notamment, les lamelles 7 du deuxième sous-ensemble 76 présentent un positionnement vertical inférieur au positionnement vertical des lamelles 7 du premier sous-ensemble 75 de sorte que les lamelles 7 du deuxième sous-ensemble 76 sont interposées entre les lamelles 7 du premier sous-ensemble 75 et le sol le long de la deuxième direction 200.

Un décalage 750, mesuré entre les lamelles 7 du premier sous-ensemble 75 et les lamelles 7 du deuxième sous-ensemble 76 le long de la deuxième direction 200, peut être défini en fonction de la hauteur 202 de l'orifice 22 avec lequel coopère le dispositif de fixation 6. A titre d'exemple, le décalage 750 est compris entre 10 et 70% de la hauteur 202 de l'orifice 22, notamment entre 10 et 50%, voire 10 et 45%.

Similairement à ce qui a été précédemment exposé, les lamelles 7 des différents sous-ensembles 75, 76 sont configurées pour coopérer avec le panneau extérieur 2 de l'ouvrant 10 et pour maintenir le moyen d'étanchéité 4 relativement audit panneau le long d'au moins la deuxième direction 200. Le positionnement verticalement abaissé du deuxième sous-ensemble 76 de lamelles 7, plus en retrait le long de la deuxième direction 200, permet d'assurer l'inviolabilité de l'agencement 15. La bordure 220 de l'orifice 22 forme butée du deuxième sous-ensemble 76 lorsqu'un effort important, du bas vers le haut, est exercé sur le moyen d'étanchéité 4, par exemple en cas de démontage forcé lors d'une tentative d'effraction dans le véhicule 1.

Optionnellement, au moins l'une des lamelles 7, notamment son bord supérieur 71, du premier sous-ensemble 75 et au moins l'une des lamelles du deuxième sous-ensemble 76 présentent une profondeur 703 supérieure ou égale à 1.5 fois une épaisseur 201 du panneau extérieur 2. Additionnellement, au moins l'une des lamelles du deuxième sous-ensemble 76 peut présenter une profondeur 703, le long de la troisième direction 300, supérieure ou égale à la profondeur 703 de la lamelle la moins profonde du premier sous-ensemble 75.

Les lamelles 7 du premier sous-ensemble 75 et du deuxième sous-ensemble 76 sont préférentiellement disposées en alternance les unes des autres. Une lamelle du deuxième sous-ensemble 76 est ainsi interposée, le long de la première direction 100, entre deux lamelles 7 du premier sous-ensemble 75, et inversement.

En outre, les lamelles 7 peuvent être particulièrement disposées au sein de l'organe de blocage 62 de sorte qu'une lamelle du premier sous-ensemble 75 et une lamelle du deuxième sous-ensemble 76, adjacentes l'une à l'autre le long de la première direction 100, sont séparées par un espacement 702 de l'ordre de l'épaisseur ±10% d'au moins l'une des lamelles de la pluralité de lamelles 7. En particulier, tout ou partie des lamelles 7 de la pluralité de lamelles 7 sont disposées et/ou dimensionnées régulièrement, c'est-à-dire qu'elles présentent des espacements 702 égaux et/ou que les lamelles 7 présentent une épaisseur 701 égale ou sensiblement égale.

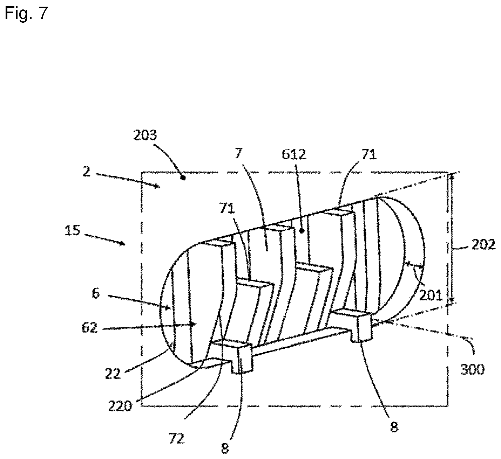

La figure 7 illustre une variante de réalisation du dispositif de fixation 6 dans lequel l'organe de blocage 62 comprend au moins un crochet 8 destiné à coopérer avec le panneau extérieur 2. L'au moins un crochet 8 est configuré pour maintenir le moyen d'étanchéité 4 relativement au panneau le long d'au moins la troisième direction 300. Une telle variante peut être mise en œuvre pour chacun des premier et deuxième modes de réalisation tels que précédemment décrits, respectivement en référence aux figures 5 et 6.

Dans l'exemple illustré, le dispositif de fixation 6 comprend deux crochets 8. Il est entendu qu'une telle représentation n'est en rien limitative et que toute description ci-après, faite en référence à un crochet 8, peut s'étendre à tout ou partie d'une pluralité de crochets 8. Le crochet 8 s'étend en saillie de l'embase 61 du dispositif de fixation 6, notamment en saillie relativement à la deuxième surface 612 de l'embase 61, et d'un même côté que l'organe de blocage 62. Le crochet 8 s'étend en partie transversalement à l'embase 61, notamment perpendiculairement à celle-ci, en direction du panneau extérieur 2 lorsque l'agencement 15 selon l'invention est assemblé.

Le crochet 8 peut être issu de l'une des lamelles 7 de la pluralité de lamelles et s'étendre au moins en partie dans la continuité de celle-ci. Par exemple, le crochet 8 peut être issus du bord incliné 72 de la lamelle 7. Autrement dit, le crochet 8 s'étend en saillie d'au moins une lamelle 7 de la pluralité de lamelles 7 le long de la troisième direction 300. Particulièrement, pour le deuxième mode de réalisation, le crochet 8 peut être issu de l'une des lamelles 7 du premier sous-ensemble 75, tel qu'illustré, et/ou de l'une des lamelles 7 du deuxième sous-ensemble 76. De préférence, le crochet 8 est venu de matière avec la lamelle 7 le portant. De manière optionnelle mais préférentielle, le crochet 8 présente une épaisseur, le long de la première direction 100, égale ou sensiblement égale à l'épaisseur 701 de la lamelle 7 le portant.

Selon une alternative non représentée, le crochet 8 peut être issu de la deuxième surface 612 de l'embase 61, par exemple afin d'être disposé dans l'espacement 702 séparant deux lamelles 7 adjacentes.

Au sein de l'agencement 15, le crochet 8 s'étend au travers de l'orifice 22 recevant l'organe de blocage 62 afin de coopérer avec le panneau extérieur 2. Il s'étend en prise de la bordure 220, en l'espèce de sa partie inférieure, de l'orifice 22 ménagé dans le panneau extérieur 2 de sorte que, lorsque le moyen d'étanchéité 4 est déplacé le long de la troisième direction 300, le crochet 8 vient au contact d'une face extérieure 203 du panneau extérieur 2, tournée vers l'environnement extérieur. Il en résulte le maintien adéquat et le blocage, relativement au panneau extérieur 2, du moyen d'étanchéité 4 le long de la troisième direction 300 en dépit des cycles d'ouverture-fermeture de la vitre 3. En outre, le crochet 8 peut participer au maintien en position et/ou au blocage du moyen d'étanchéité 4 relativement au panneau extérieur 2 le long de la deuxième direction 200, en l'espèce en limitant le déplacement du moyen d'étanchéité 4 vers le bas.

Selon d'autres variantes non représentées, le moyen d'étanchéité 4 peut comprendre une pluralité de dispositifs de fixation 6 tels qu'exposés précédemment. De tels dispositifs de fixation peuvent être disposées dans une même portion extrême 501 du corps 5 du moyen d'étanchéité 4 ou, inversement, être compris dans des portions extrêmes 501 opposées, telles qu'illustrées à la figure 2. Dans de telles variantes, la partie supérieure du panneau extérieur 2 comprend, de même une pluralité d'orifices 22, chaque orifice 22 étant apte à recevoir l'organe de blocage 62 d'un dispositif de fixation 6 distinct du moyen d'étanchéité 4. Le nombre d'orifices 22 est notamment au moins égal au nombre de dispositifs de fixation, notamment au nombre d'organes de blocage 62, du moyen d'étanchéité 4. Au sein de l'agencement 15, les orifices 22 sont configurés pour s'étendre chacun en regard d'un organe de blocage 62 le long de la troisième direction 300. De ce fait, les orifices 22 peuvent être compris dans une même partie extrêmale 23 de l'extrémité supérieure 21 du panneau extérieur 2 ou, inversement, dans des parties extrêmales 23 opposées de sorte à maintenir le moyen d'étanchéité 4 relativement au panneau extérieur 2 à l'avant et à l'arrière.

Selon encore une autre variante, à laquelle la présente description s'applique *mutatis mutandis,* un même dispositif de fixation peut comprendre une pluralité d'organes de blocage 62, issus d'une même embase 61, chacun desdits organe de blocage 62 étant configuré pour coopérer avec au moins un orifice 22 du panneau extérieur 2, par exemple un orifice 22 distinct.

Ainsi, le moyen d'étanchéité et l'agencement selon l'invention permettent d'assurer le maintien du moyen d'étanchéité relativement au panneau extérieur de l'ouvrant selon la direction verticale notamment, prévenant ainsi le déplacement et donc le déplaquage du moyen d'étanchéité, notamment au niveau de ses portions extrêmes. Par voie de conséquence, la qualité est ainsi préservée au fil du temps et/ou au fil des cycles de montées de la vitre. La forme du dispositif de fixation du moyen d'étanchéité permet un assemblage simplifié de l'ouvrant et est adaptée à une réalisation à moindre coût, par exemple par moulage.

## Revendications

1. Moyen d'étanchéité (4), notamment lécheur extérieur, destiné à être disposé au contact d'une vitre (3) d'un ouvrant (10) d'un véhicule (1), le moyen d'étanchéité (4) comprenant un corps (5) allongé s'étendant le long d'une première direction (100) et au moins un dispositif de fixation (6) rapporté et configuré pour coopérer avec un panneau (2) de l'ouvrant (10);
- le corps (5) présente un profil sensiblement en « U » comprenant une branche primaire (51) et une branche secondaire (52), configurées pour être disposées de part et d'autre du panneau de l'ouvrant (10) ;
- l'au moins un dispositif de fixation (6) comprend une embase (61) et au moins un organe de blocage (62) s'étendant en saillie de l'embase (61), l'embase (61) étant solidaire de l'une de la branche primaire (51) ou de la branche secondaire (52) et l'organe de blocage (62) s'étendant vers l'autre de la branche primaire (51) ou de la branche secondaire (52), à distance non nulle de celle-ci ;
- l'organe de blocage (62) comprend une pluralité de lamelles (7), parallèles ou sensiblement parallèles entre elles, comprenant au moins trois lamelles (7) configurées pour coopérer avec le panneau (2) de l'ouvrant (10) et pour maintenir le moyen d'étanchéité (4) relativement audit panneau (2) le long d'au moins une deuxième direction (200) orthogonale à la première direction (100),
**caractérisé en ce que**:
- l'organe de blocage (62) comprend au moins un crochet (8) destiné à coopérer avec le panneau (2) de sorte à maintenir le moyen d'étanchéité (4) relativement audit panneau (2) le long d'au moins une troisième direction (300), orthogonale à la première direction (100) et à la deuxième direction (200).

2. Moyen d'étanchéité (4) selon la revendication précédente, dans lequel l'au moins un dispositif de fixation (6) est disposé dans une portion extrême (501) du corps (5) le long de la première direction (100), notamment dans une portion extrême (501) représentant entre 5 et 20% d'une longueur totale (550), le long de la première direction (100), du corps (5) du moyen d'étanchéité (4).

3. Moyen d'étanchéité (4) selon l'une des revendications précédentes, dans lequel le dispositif de fixation (6) est de type insert, notamment venu de moulage en matière plastique tel que du polypropylène chargé, le dispositif de fixation (6) étant rapporté et/ou surmoulé avec le corps (5) du moyen d'étanchéité (4), notamment par un surmoulage (55) en élastomère thermoplastique.

4. Moyen d'étanchéité (4) selon l'une des revendications précédentes, dans lequel au moins deux lamelles (7) adjacentes de la pluralité de lamelles (7) sont séparées l'une de l'autre, le long de la première direction (100), par un espacement (702) de l'ordre de l'épaisseur (701) d'au moins une lamelle (7) de la pluralité de lamelles (7), notamment 0.9 fois à 1.1 fois l'épaisseur (701) d'au moins une lamelle (7) de la pluralité de lamelles (7).

5. Moyen d'étanchéité (4) selon l'une des revendications précédentes, dans lequel tout ou partie des lamelles (7) de la pluralité de lamelles (7) comprend un bord incliné (72) relativement à l'embase (61) présentant un angle (α) compris entre 15 et 60 °.

6. Moyen d'étanchéité (4) selon l'une des revendications précédentes, dans lequel tout ou partie des lamelles (7) de la pluralité de lamelles (7) comprend un bord supérieur (71), plan ou sensiblement plan, configuré pour former butée du panneau le long de la deuxième direction (200).

7. Moyen d'étanchéité (4) selon la revendication précédente, dans lequel les bords supérieurs (71) de tout ou partie de la pluralité de lamelles (7) s'inscri(ven)t dans un plan (1000, 1001, 1002) commun, orthogonal à la deuxième direction (200).

8. Moyen d'étanchéité (4) selon la revendication 6 ou 7, dans lequel le ou les bord(s) supérieur(s) d'un premier sous-ensemble (75) de lamelle(s) de la pluralité de lamelles (7) s'inscri(ven)t dans un premier plan (1001) et le ou les bord(s) supérieur(s) d'un deuxième sous-ensemble (76) de lamelle(s) de la pluralité de lamelles (7) s'inscri(ven)t dans un deuxième plan (1002), distinct du premier plan (1001), le premier plan (1001) et le deuxième plan (1002) étant parallèles entre eux et étant orthogonaux à la deuxième direction (200).

9. Agencement (15) d'un moyen d'étanchéité (4) pour un ouvrant (10) de véhicule (1) automobile, notamment pour une porte latérale, **caractérisé en ce que** l'agencement (15) comprend :
- un panneau extérieur (2) d'ouvrant (10) dont au moins une partie extrêmale (23), le long de la première direction (100), d'une extrémité supérieure (21) comprend au moins un orifice (22), notamment un orifice (22) oblong ;
- un moyen d'étanchéité (4) selon l'une des revendications 1 à 8, disposé en prise de l'extrémité supérieure (21) afin que l'ensemble de la pluralité de lamelles (7) de l'organe de blocage (62) s'étende au moins en partie dans l'au moins un orifice (22) de sorte qu'une bordure (220) dudit orifice (22) forme butée de l'organe de blocage (62) le long de la première direction (100) afin de maintenir le moyen d'étanchéité (4) par rapport au panneau extérieur (2) au moins selon ladite première direction (100).

10. Agencement (15) selon la revendication précédente, dans lequel le panneau extérieur (2) est **caractérisé par** une épaisseur (201), aux abords de l'au moins un orifice (22), au moins une lamelle (7) de la pluralité de lamelles (7) présentant une profondeur (703) supérieure ou égale à 1.5 fois l'épaisseur (201) du panneau extérieur (2).

11. Ouvrant (10) d'un véhicule (1) comprenant une vitre (3), notamment une vitre (3) mobile configurée pour être déplacée entre une position ouverte et une position fermée, l'ouvrant (10) comprenant un agencement (15) selon l'une des revendications 9 ou 10 et/ou un moyen d'étanchéité (4) selon l'une des revendications 1 à 8, le moyen d'étanchéité (4) étant disposé de sorte à s'étendre au contact de la vitre (3).

12. Véhicule (1), notamment véhicule automobile, **caractérisé en ce qu'**il comprend un ouvrant (10) selon la revendication précédente et/ou un agencement (15) selon la revendication 9 ou 10 et/ou un moyen d'étanchéité (4) selon l'une des revendications 1 à 8.

## Patentansprüche

1. Dichtmittel (4), insbesondere äußerer Abstreifer, das dazu bestimmt ist, in Kontakt mit einer Scheibe (3) eines Öffnungselements (10) eines Fahrzeugs (1) angeordnet zu werden, das Dichtmittel (4) umfassend einen sich entlang einer ersten Richtung (100) erstreckenden langgestreckten Körper (5) und mindestens eine Befestigungsvorrichtung (6), die angesetzt ist und dazu ausgestaltet ist, mit einem Paneel (2) des Öffnungselements (10) zusammenzuwirken;
- der Körper (5) weist im Wesentlichen ein Profil eines "U" auf, das einen primären Schenkel (51) und einen sekundären Schenkel (52) umfasst, die dazu ausgestaltet sind, beidseits des Paneels des Öffnungselements (10) angeordnet zu werden;
- die mindestens eine Befestigungsvorrichtung (6) umfasst eine Basis (61) und mindestens ein sich von der Basis (61) abstehend erstreckendes Sperrelement (62), wobei die Basis (61) mit dem einen des primären Schenkels (51) oder des sekundären Schenkels (52) fest verbunden ist und wobei sich das Sperrelement (62) zu dem anderen des primären Schenkels (51) oder des sekundären Schenkels (52) hin in einem Abstand ungleich null von diesem erstreckt;
- das Sperrelement (62) umfasst eine Mehrzahl von zueinander parallelen oder im Wesentlichen parallelen Lamellen (7), umfassend mindestens drei Lamellen (7), die dazu ausgestaltet sind, mit dem Paneel (2) des Öffnungselements (10) zusammenzuwirken und das Dichtmittel (4) relativ zu dem Paneel (2) entlang mindestens einer zweiten Richtung (200), die orthogonal zu der ersten Richtung (100) verläuft, zu halten, **dadurch gekennzeichnet, dass**:
- das Sperrelement (62) mindestens einen Haken (8) umfasst, der dazu bestimmt ist, mit dem Paneel (2) so zusammenzuwirken, dass das Dichtmittel (4) relativ zu dem Paneel (2) entlang mindestens einer dritten Richtung (300), die orthogonal zu der ersten Richtung (100) und zu der zweiten Richtung (200) verläuft, gehalten wird.

2. Dichtmittel (4) nach dem vorhergehenden Anspruch, wobei die mindestens eine Befestigungsvorrichtung (6) in einem Endabschnitt (501) des Körpers (5) entlang der ersten Richtung (100) angeordnet ist, insbesondere in einem Endabschnitt (501), der zwischen 5 und 20 % einer Gesamtlänge (550) entlang der ersten Richtung (100) des Körpers (5) des Dichtmittels (4) ausmacht.

3. Dichtmittel (4) nach einem der vorhergehenden Ansprüche, wobei die Befestigungsvorrichtung (6) einsatzartig ist, insbesondere aus Kunststoff wie gefülltem Polypropylen geformt ist, wobei die Befestigungsvorrichtung (6) an den Körper (5) des Dichtmittels (4) angesetzt und/oder angespritzt ist, insbesondere durch ein Anspritzen (55) aus thermoplastischem Elastomer.

4. Dichtmittel (4) nach einem der vorhergehenden Ansprüche, wobei mindestens zwei benachbarte Lamellen (7) der Mehrzahl von Lamellen (7) voneinander entlang der ersten Richtung (100) durch einen Zwischenraum (702) in der Größenordnung der Dicke (701) mindestens einer Lamelle (7) der Mehrzahl von Lamellen (7), insbesondere dem 0,9-Fachen bis 1,1-Fachen der Dicke (701) mindestens einer Lamelle (7) der Mehrzahl von Lamellen (7), getrennt sind.

5. Dichtmittel (4) nach einem der vorhergehenden Ansprüche, wobei alle oder einige Lamellen (7) der Mehrzahl von Lamellen (7) einen relativ zu der Basis (61) geneigten Rand (72) umfassen, der einen Winkel (α) zwischen 15 und 60° aufweist.

6. Dichtmittel (4) nach einem der vorhergehenden Ansprüche, wobei alle oder einige Lamellen (7) der Mehrzahl von Lamellen (7) eine ebenen oder im Wesentlichen ebenen oberen Rand (71) umfassen, der dazu ausgestaltet ist, einen Anschlag für das Paneel entlang der zweiten Richtung (200) zu bilden.

7. Dichtmittel (4) nach dem vorhergehenden Anspruch, wobei die oberen Ränder (71) aller oder einiger der Mehrzahl von Lamellen (7) in einer gemeinsamen Ebene (1000, 1001, 1002) liegen, die orthogonal zu der zweiten Richtung (200) verläuft.

8. Dichtmittel (4) nach Anspruch 6 oder 7, wobei der obere Rand oder die oberen Ränder einer ersten Teilmenge (75) von Lamellen der Mehrzahl von Lamellen (7) in einer ersten Ebene (1001) liegt(liegen) und der obere Rand oder die oberen Ränder einer zweiten Teilmenge (76) von Lamellen der Mehrzahl der Lamellen (7) in einer zweiten Ebene (1002) liegt(liegen), die verschieden von der ersten Ebene (1001) ist, wobei die erste Ebene (1001) und die zweite Ebene (1002) parallel zueinander und orthogonal zu der zweiten Richtung (200) verlaufen.

9. Anordnung (15) eines Dichtmittels (4) für ein Öffnungselement (10) eines Kraftfahrzeugs (1), insbesondere für eine Seitentür, **dadurch gekennzeichnet, dass** die Anordnung (15) umfasst:
- ein äußeres Paneel (2) des Öffnungselements (10), von dem mindestens ein Endteil (23), entlang der ersten Richtung (100), eines oberen Endes (21) mindestens eine Öffnung (22), insbesondere eine längliche Öffnung (22), umfasst;
- ein Dichtmittel (4) nach einem der Ansprüche 1 bis 8, das im Eingriff mit dem oberen Ende (21) angeordnet ist, damit sich die gesamte Mehrzahl von Lamellen (7) des Sperrelements (62) mindestens zum Teil in der mindestens einen Öffnung (22) erstreckt, so dass eine Kante (220) der Öffnung (22) einen Anschlag für das Sperrelement (62) entlang der ersten Richtung (100) bildet, um das Dichtmittel (4) in Bezug auf das äußere Paneel (2) mindestens entlang der ersten Richtung (100) zu halten.

10. Anordnung (15) nach dem vorhergehenden Anspruch, wobei das äußere Paneel (2) **gekennzeichnet ist durch** eine Dicke (201) in der Umgebung der mindestens einen Öffnung (22), wobei mindestens eine Lamelle (7) der Mehrzahl von Lamellen (7) eine Tiefe (703) größer oder gleich dem 1,5-Fachen der Dicke (201) des äußeren Paneels (2) aufweist.

11. Öffnungselement (10) eines Fahrzeugs (1), umfassend eine Scheibe (3), insbesondere eine bewegliche Scheibe (3), die dazu ausgestaltet ist, zwischen einer geöffneten Stellung und einer geschlossenen Stellung verlagert zu werden, wobei das Öffnungselement (10) eine Anordnung (15) nach einem der Ansprüche 9 oder 10 und/oder ein Dichtmittel (4) nach einem der Ansprüche 1 bis 8 umfasst, wobei das Dichtmittel (4) so angeordnet ist, dass es sich in Kontakt mit der Scheibe (3) erstreckt.

12. Fahrzeug (1), insbesondere Kraftfahrzeug, **dadurch gekennzeichnet, dass** es ein Öffnungselement (10) nach dem vorhergehenden Anspruch und/oder eine Anordnung (15) nach Anspruch 9 oder 10 und/oder ein Dichtmittel (4) nach einem der Ansprüche 1 bis 8 umfasst.

## Claims

1. Sealing means (4), in particular outer sealing strip, intended to be disposed in contact with a window (3) of an opening leaf (10) of a vehicle (1), the sealing means (4) comprising an elongate body (5) extending along a first direction (100) and at least one fastening device (6) attached and configured to cooperate with a panel (2) of the opening leaf (10);
- the body (5) has a substantially U-shaped profile comprising a primary arm (51) and a secondary arm (52) which are configured to be disposed on either side of the panel of the opening leaf (10);
- the at least one fastening device (6) comprises a base (61) and at least one blocking member (62) projecting from the base (61), the base (61) being secured to one of the primary arm (51) or the secondary arm (52) and the blocking member (62) extending towards the other of the primary arm (51) or the secondary arm (52), at a non-zero distance therefrom;
- the blocking member (62) comprises a plurality of fins (7), which are parallel or substantially parallel to one another, comprising at least three fins (7) configured to cooperate with the panel (2) of the opening leaf (10) and to hold the sealing means (4) relative to said panel (2) along at least a second direction (200) orthogonal to the first direction (100),
**characterized in that**:
- the blocking member (62) comprises at least one hook (8) intended to cooperate with the panel (2) so as to hold the sealing means (4) relative to said panel (2) along at least a third direction (300) orthogonal to the first direction (100) and to the second direction (200).

2. Sealing means (4) according to the preceding claim, wherein the at least one fastening device (6) is disposed in an end portion (501) of the body (5) along the first direction (100), notably in an end portion (501) representing between 5 and 20% of a total length (550), along the first direction (100), of the body (5) of the sealing means (4).

3. Sealing means (4) according to either of the preceding claims, wherein the fastening device (6) is of the insert type, notably integrally moulded from plastics material such as filled polypropylene, the fastening device (6) being attached and/or overmoulded with the body (5) of the sealing means (4), notably by an overmoulding (55) of thermoplastic elastomer.

4. Sealing means (4) according to any of the preceding claims, wherein at least two adjacent fins (7) of the plurality of fins (7) are separated from one another, along the first direction (100), by a spacing (702) of the order of the thickness (701) of at least one fin (7) of the plurality of fins (7), notably 0.9 times to 1.1 times the thickness (701) of at least one fin (7) of the plurality of fins (7).

5. Sealing means (4) according to any of the preceding claims, wherein all or some of the fins (7) of the plurality of fins (7) comprise an inclined edge (72) relative to the base (61) having an angle (a) of between 15 and 60°.

6. Sealing means (4) according to any of the preceding claims, wherein all or some of the fins (7) of the plurality of fins (7) comprise a planar or substantially planar upper edge (71) configured to form an end-stop for the panel along the second direction (200).

7. Sealing means (4) according to the preceding claim, wherein the upper edges (71) of all or some of the plurality of fins (7) are inscribed in a common plane (1000, 1001, 1002) orthogonal to the second direction (200).

8. Sealing means (4) according to Claim 6 or 7, wherein the upper edge or edges of a first subset (75) of fins of the plurality of fins (7) is or are inscribed in a first plane (1001) and the upper edge or edges of a second subset (76) of fins of the plurality of fins (7) is or are inscribed in a second plane (1002), distinct from the first plane (1001), the first plane (1001) and the second plane (1002) being parallel to one another and being orthogonal to the second direction (200).

9. Arrangement (15) of a sealing means (4) for an opening leaf (10) of a motor vehicle (1), notably for a side door, **characterized in that** the arrangement (15) comprises:
- an outer panel (2) of an opening leaf (10), of which at least one end part (23), along the first direction (100), of an upper end (21) comprises at least one orifice (22), notably an oblong orifice (22);
- a sealing means (4) according to any of Claims 1 to 8, disposed in engagement with the upper end (21) so that all of the plurality of fins (7) of the blocking member (62) extend at least partially in the at least one orifice (22) such that a border (220) of said orifice (22) forms an end-stop for the blocking member (62) along the first direction (100) in order to hold the sealing means (4) with respect to the outer panel (2) at least along said first direction (100).

10. Arrangement (15) according to the preceding claim, wherein the outer panel (2) is **characterized by** a thickness (201), in the vicinity of the at least one orifice (22), at least one fin (7) of the plurality of fins (7) having a depth (703) greater than or equal to 1.5 times the thickness (201) of the outer panel (2).

11. Opening leaf (10) of a vehicle (1) comprising a window (3), notably a moveable window (3) configured to be moved between an open position and a closed position, the opening leaf (10) comprising an arrangement (15) according to either of Claims 9 and 10 and/or a sealing means (4) according to any of Claims 1 to 8, the sealing means (4) being disposed so as to extend in contact with the window (3).

12. Vehicle (1), notably motor vehicle, **characterized in that** it comprises an opening leaf (10) according to the preceding claim and/or an arrangement (15) according to Claim 9 or 10 and/or a sealing means (4) according to any of Claims 1 to 8.
